# NOUVEAU FASCICULE DE BREVET EUROPEEN

(11) **EP 0 328 435 B2**
(45) Date de publication et mention de la décision concernant l'opposition: **11.02.1998**
(45) Mention de la délivrance du brevet: 04.08.1993
(21) Numéro de dépôt: 89400270.8
(22) Date de dépôt: 31.01.1989
(51) Int. Cl.: H04L 12/28

(54) **Procédé et dispositif de transmission au sein d'un réseau de transmission d'informations comportant plusieurs stations maîtres et au moins une station esclave, d'un message d'informations, notament dans un véhicle automobile**
Verfahren und Anordnung zur Uebertragung einer Nachricht in einem Nachrichtenübertragungsnetz mit mehreren Masterstationen und mindestens einer Slavestation, insbesondere in einem Fahrzeug
Information message transmission method and arrangement in an information transmission network comprising master stations and at least one slave station, particularly in a motor vehicle

(30) Priorité: 10.02.1988 FR 8801597
(43) Date de publication de la demande: 16.08.1989
(73) Titulaire: AUTOMOBILES PEUGEOT, 75116 Paris (FR); AUTOMOBILES CITROEN, 92200 Neuilly-sur-Seine (FR)
(72) Inventeur: Herbault, Patrick, F-75016 - Paris (FR)
(74) Mandataire: Polus, Camille

(56) Documents cités:
- DE-A- 3 506 118
- FR-A- 2 578 070
- E.D.N. ELECTRICAL DESIGN NEWS, vol. 31, no. 7, 3 avril 1986, pages 153-162; C.K. FENGER: "Bus links peripherals, multiple masters in low-speed network"
- SAE TECHNICAL PAPER, Series no. 840317, février 1984, pages 177-184, Warrendale, US; R.L. MITCHELL: "A small area network for cars"
- "82526 Controller Area Network Chip Architectural Overview" Intel Corp., janvier 1988
- "Recommended Practice for a Class B Automotive Network", SAE Technical Paper, Series No. 871554, 1987

## Description

La présente invention concerne un procédé de transmission, au sein d'un réseau de transmission d'informations comportant plusieurs stations maîtres et au moins une station esclave, d'un message d'informations entre au moins deux stations reliées par le réseau de transmission d'informations, notamment dans un véhicule automobile et un dispositif pour la mise en oeuvre d'un tel procédé.

Dans un réseau de communication, notamment de véhicule automobile, on peut définir des stations maîtres et des stations esclaves. Une station maître peut accéder au réseau par une méthode d'accès définie (collision, arbitrage bit à bit sur collision, ... ) alors qu'une station esclave ne peut communiquer que si elle est sollicitée par une station maître.

Dans les réseaux auxquels se rapporte l'invention, on considère que les informations peuvent être émises suivant différents modes, à savoir :
- d'une station vers une autre station, encore appelé mode point à point,
- d'une station vers plusieurs stations, encore appelé mode multipoint,
- d'une station vers toutes les autres stations, encore appelé mode diffusion.

Dans ce dernier mode, toute station doit pouvoir examiner les messages transitant sur le réseau et pour ces raisons, dans les protocoles multimaîtres, un format de trame unique a été développé pour en faciliter l'interprétation.

Par contre, pour des raisons soit techniques, soit économiques, on désire que les stations esclaves puissent être incluses dans le réseau.

Par exemple, le protocole D²B (Domestic Digital Bus) est un protocole multimaître multi-esclave, mais les formats de communication ne sont pas identiques (voir document SAE technical paper, séries n° 840317, février 1984, p. 177 à 184).

Ces remarques s'appliquent également au protocole I²C mettant en oeuvre un procédé de réponse dans la trame (voir document E.D.N. Electrical Design News, vol. 31, n°7, 3 avril 1986, p. 153 à 162).

Le but de l'invention est donc de résoudre ce problème en proposant un procédé et un dispositif selon les revendications 1 à 5.

L'invention sera mieux comprise à l'aide de la description qui va suivre, donnée uniquement à titre d'exemple et faite en se référant aux dessins annexés, sur lesquels:
- la Fig.1 illustre le fonctionnement d'un procédé de transmission de l'état de la technique;
- la Fig.2 illustre le fonctionnement d'un procédé de transmission selon l'invention;
- les Fig.3 et 4 illustrent deux modes de réalisation de stations esclaves comportant des moyens de mise en oeuvre d'un procédé selon l'invention; et
- la Fig.5 illustre le fonctionnement d'une variante de réalisation d'un procédé selon l'invention.

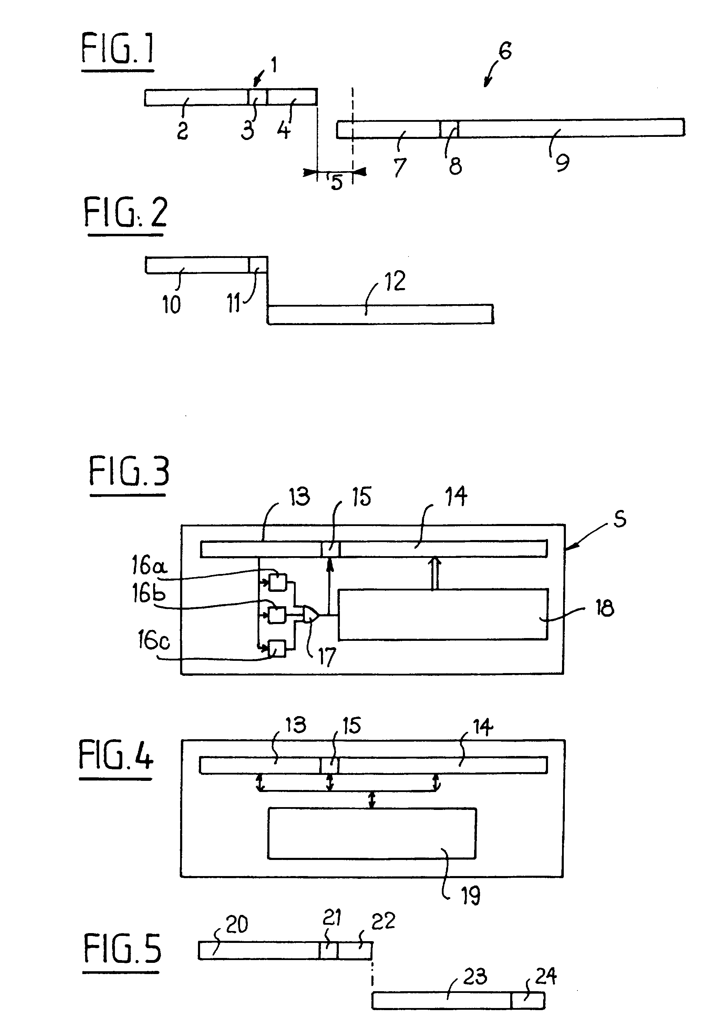

Ainsi qu'on peut le voir sur la Fig. 1, les échanges d'informations entre différentes stations d'un véhicule automobile commencent par l'émission, par une station maître d'une question 1 comportant une entête 2 qui précise l'identité du message, un bit 3 indiquant que c'est une question et une fin de trame 4 comportant un mot de contrôle précisant par exemple la taille du message, un code correcteur d'erreur, un accusé de réception ou une indication d'erreur.

Si par exemple une station esclave doit répondre à une telle trame de question, une solution consiste à lui donner l'accès au réseau en priorité pendant un temps limité 5 avant de rendre l'accès au réseau, à l'ensemble des stations maîtres. La réponse 6 provenant de la station esclave comporte alors un champ d'entête 7 identique à celle de la question, un bit 8 indiquant qu'il s'agit d'une réponse et un champ de données 9 contenant la réponse à la question posée et le mot de contrôle.

La réponse s'effectuant dans un format unique, elle est parfaitement interprétée par les autres stations.

Cependant, si la station esdave ne peut garantir de réponse immédiate, on constate qu'il faut alors répéter la question, ou transformer la station esclave en station maître si le processeur utilisé est trop long.

Si la station esclave est réalisée en logique numérique câblée, le problème est alors inverse. La station esclave doit attendre la fin de la question, réémettre l'entête du message puis les données alors qu'elles étaient disponibles immédiatement.

Afin d'éviter cet inconvénient, le procédé selon l'invention consiste à former des messages contenant, comme cela est représenté sur la Fig.2, un champ d'entête 10 émise par la station maître, un bit 11 d'identification du message et un champ de données 12 émises par la station esdave.

Ainsi le message se présente sous la forme d'une réponse, la station esclave concernée ayant un temps de réponse garantissant que l'émission des données 12 suit immédiatement le champ d'entête et le bit d'identification de message émis par la station demanderesse.

Vis à vis des autres stations, la trame apparaît comme une trame normale, bien qu'émise par deux stations différentes.

Si la méthode de collision est l'arbitrage bit à bit, le codage du bit indiquant qu'il s'agit d'une question et d'une réponse est tel que :
- le bit récessif indique une question,
- le bit dominant indique une réponse,
ceci afin que si une station maître émet une question et une autre station émet une réponse en même temps, la réponse soit prioritaire.

Dans ce cas, si la station esclave contient le dispositif de priorité bit à bit, la station maître demanderesse émet l'entête 10 et le bit 11 récessif. La station esclave transforme le bit 11 en dominant et termine le message par les données de réponse 12.

Si la station esclave n'est par prête à temps alors la trame de question se finit normalement, on procède comme décrit en regard de la Fig.1.

Le dispositif de mise en oeuvre du procédé décrit précédemment, nécessite que la station esclave comporte des moyens de décodage de l'entête du message pour comparer l'entête du message reçu avec une entête ou plusieurs entêtes de message affectées à cette station.

Comme on peut le voir sur la Fig.3, la station esclave S recevant le message comporte un premier registre 13 dans lequel est chargée au moins en partie l'entête du message, et un second registre 14 relié au réseau de transmission d'informations du véhicule et dans lequel sont chargées des données à partir des circuits de la station esclave.

Le bit d'identification du message est chargé dans un troisième registre 15 de la station. La station comporte également des moyens de comparaison par exemple 16a, 16b, 16c permettant de comparer l'entête reçue ou au moins une partie de celle-ci à une ou plusieurs entêtes caractéristiques affectées à cette station. Les sorties de ces moyens de comparaison sont reliées aux entrées d'une porte OU 17 dont la sortie est raccordée à un processeur de station 18.

Ainsi, lorsque l'entête du message reçu correspond à une entête affectée à la station S con-cernée, le processeur 18 de celle-ci transforme, si besoin, le bit stocké dans le registre 15, d'un bit identifiant une question en un bit identifiant une réponse et enclenche le processus de transfert de données de réponse par le registre 14 dans le réseau de transmission du véhicule.

Les moyens de comparaison peuvent par exemple être constitués par des moyens comportant un premier registre dans lequel est chargée au moins en partie l'entête du message, le contenu de ce registre étant comparé au contenu d'un second registre de la station, dans lequel est chargé un mot caractéristique affecté à la station, les sorties des moyens de comparaison des contenus des premier et second registres étant reliées à des bornes d'entrée de portes ET dont les autres bornes d'entrée sont reliées à un troisième registre dans lequel est chargé un mot de validation/inhibition des résultats des comparaisons afin de ne retenir que les portions d'entêtes souhaitées. Ceci permet d'opérer un décodage partiel modifiable bit à bit de l'entête.

Bien entendu, d'autres modes de réalisation des moyens de comparaison sont possibles.

On conçoit cependant que l'entête chargée dans le registre 13 est toujours comparée avec une entête caractéristique affectée à la station et en cas de correspondance, le processeur 18 de la station change le bit chargé dans le registre 15 d'un bit identifiant une question en un bit identifiant une réponse avant d'émettre les données de réponse par l'intermédiaire du registre 14 dans le réseau de transmission.

Il va de soi, comme on peut le voir sur la Fig.4, que toutes les opérations qui viennent d'être décrites précédemment, peuvent être réalisées par l'intermédiaire d'un processeur 19 de station relié aux premier 13, second 14 et troisième 15 registres décrits précédemment par des lignes de transmission, le temps de traitement dépendant du nombre de messages traités et de la puissance de calcul de ce proceseur.

Comme il est représenté sur la Fig.5, et afin de donner un peu plus de temps à la station esclave pour émettre des données en réponse, la station maître peut émettre à la suite du champ d'entête 20 et du bit d'identification 21, au moins une portion de la partie de message de contrôle 22 caractérisant par exemple la taille du message, jusqu'à l'envoi réel des données de réponse 23 par la station esclave et le mot de fin 24.

## Revendications

1. Procédé de transmission, au sein d'un réseau de transmission d'informations comportant plusieurs stations maîtres et au moins une station esclave, d'un message d'informations, entre au moins deux stations reliées par le réseau de transmission d'informations, notamment dans un véhicule automobile, chaque message comportant au moins un champ d'entête (10;20) précisant l'identité du message, un bit d'identification du message (11;21) et un champ de données (12;23),
caractérisé en ce que les messages émis entre des stations maîtres et les messages émis entre une station maître et une station esclave présentent un format de trame identique, le message étant émis dans le premier cas en totalité par une station maître et dans le second cas en partie par la station maître qui émet au moins l'entête et en partie par la station esclave qui émet le champ de données.

2. Procédé selon la revendication 1, caractérisé en ce que la station maître émet le bit d'identification (11 ;21).

3. Procédé selon la revendication 2, caractérisé en ce qu'à la suite de l'émission du bit d'identification du message (21), la station maître émet au moins une portion d'une partie de message de contrôle (22).

4. Procédé selon l'une des revendications précédentes, appliqué à un réseau de transmission d'informations dont la méthode de collision est l'arbitrage bit à bit, caractérisé en ce que la station maître émet un bit d'identification (11) récessif et en ce que la réponse de la station esdave commence par un bit d'identification dominant qui se substitue au bit d'identification récessif émis par la station maître.

5. Dispositif de transmission, au sein d'un réseau de transmission d'informations comportant plusieurs stations maîtres et au moins une station esclave, d'un message d'informations, entre au moins deux stations reliées par le réseau de transmission d'informations, notamment dans un véhicule automobile, pour la mise en oeuvre d'un procédé selon la revendication 1 ou 2, caractérisé en ce que la station esdave comporte un premier registre (13) dans lequel est chargée au moins en partie l'entête du message, des moyens de comparaison (16a,16b, 16c) d'au moins une partie de l'entête avec au moins un mot caractéristique affecté à cette station, la sortie des moyens de comparaison étant reliée au reste (18,19) de la station, pour que celle-ci en cas de correspondance lors de la comparaison, charge dans un second registre (14), relié au réseau de transmission d'informations, des données, de manière à former le message contenant un champ d'entête émise par la station maître et un champ de données émises par la station esclave.

6. Dispositif selon la revendication 5, caractérisé en ce que la station esclave comporte un troisième registre (15) dans lequel est chargé le bit (11;21) d'identification de message, la station maître émettant à la suite de l'entête, un bit identifiant une question et la station esclave convertissant ce bit en bit identifiant une réponse en cas de correspondance lors de la comparaison.

## Patentansprüche

1. Verfahren zur Übertragung einer Nachricht in einem Nachrichtenübertragungsnetz mit mehreren Masterstationen und mindestens einer Slavestation, zwischen wenigstens zwei durch das Nachrichtenübertragungsnetz verbundenen Stationen, insbesondere in einem Kraftfahrzeug, bei dem jede Nachricht wenigstens ein Kopffeld (10; 20), das die Identität der Nachricht angibt, ein Identifizierungsbit (11; 21) für die Nachricht und ein Datenfeld (12; 23) aufweist, dadurch **gekennzeichnet,** daß die zwischen Masterstationen übertragenen Nachrichten und die zwischen einer Masterstation und einer Slavestation übertragenen Nachrichten ein identisches Sequenzformat aufweisen, wobei die Nachricht im ersten Fall in ihrer Gesamtheit von einer Masterstation gesendet wird und im zweiten Fall zum Teil durch die Masterstation, die wenigstens den Kopf sendet, und zum Teil durch die Slavestation, die das Datenfeld sendet.

2. Verfahren nach Anspruch 1, dadurch **gekennzeichnet**, daß die Masterstation das Identifizierungsbit (11; 21) sendet.

3. Verfahren nach Anspruch 2, dadurch **gekennzeichnet**, daß im Anschluß an die Aussendung des Identifizierungsbits (21) für die Nachricht die Masterstation wenigstens einen Teil eines Steuernachrichtenblockes (22) sendet.

4. Verfahren nach einem der vorstehenden Ansprüche, angewandt auf ein Informationsübertragungsnetz, bei dem das Kollisionsverfahren die Bit-für-Bit-Aufteilung ist, dadurch **gekennzeichnet**, daß die Masterstation ein rezessives Identifizierungsbit (11) sendet und daß die Antwort der Slavestation mit einem dominanten Identifizierungsbit beginnt, das an die Stelle des von der Masterstation gesendeten rezessiven Identifizierungsbits tritt.

5. Anordnung zur Übertragung einer Nachricht in einem Nachrichtenübertragungsnetz mit mehreren Masterstationen und mindestens einer Slavestation, zwischen zwei durch das Nachrichtenübertragungsnetz verbundenen Stationen, insbesondere in einem Kraftfahrzeug, zur Durchführung des Verfahrens nach Anspruch 1 oder 2, dadurch **gekennzeichnet**, daß die Slavestation ein erstes Register (13), in dem wenigstens ein Teil des Kopfes der Nachricht geladen ist, und Vergleichsmittel (16a, 16b, 16c) zum Vergleich wenigstens eines Teils des Kopfes mit wenigstens einem dieser Station zugeordneten Kennwort aufweist, wobei der Ausgang der Vergleichsmittel mit dem Rest (18, 19) der Station verbunden ist, so daß diese im Fall der Übereinstimmung bei dem Vergleich Daten in ein mit dem Nachrichtenübertragungsnetz verbundenes zweites Register (14) lädt, derart, daß die Nachricht gebildet wird, die ein von der Masterstation gesendetes Kopffeld und ein von der Slavestation gesendetes Datenfeld enthält.

6. Anordnung nach Anspruch 5, dadurch **gekennzeichnet,** daß die Slavestation ein drittes Register (15) aufweist, in dem das Identifizierungsbit (11; 21) für die Nachricht geladen ist, wobei die Masterstation im Anschluß an den Kopf ein Bit zur Identifizierung einer Anfrage sendet und die Slavestation dieses Bit in ein Bit zur Identifizierung einer Antwort umwandelt, sofern bei dem Vergleich Übereinstimmung besteht.

## Claims

1. Method for transmitting, within a data transmission network including several master stations and at least one slave station, a data message between at least two stations connected by the data transmission network, particularly in a motor vehicle, each message having at least one header field (10; 20) specifying the identity of the message, a message identification bit (11; 21) and a data field (12; 23), characterised in that the messages transmitted between the master stations and the messages transmitted between a master station and a slave station have an identical frame format, the message being transmitted in the first case entirely by a master station, and in the second case partly by the master station, which transmits at least the header, and partly by the slave station which transmits the data field.

2. Method according to Claim 1, characterised in that the master station transmits the identification bit (11; 21).

3. Method according to Claim 2, characterised in that, following the transmission of the message identification bit (21), the master station transmits at least one portion of a part of a check message (22).

4. Method according to one of the preceding claims, applied to a data transmission network in which the collision method is bit-to-bit arbitration, characterised in that the master station transmits a recessive identification bit (11) and in that the response from the slave station commences with a dominant identification bit which is substituted for the recessive identification bit transmitted by the master station.

5. Device for transmitting, within a data transmission network including several master stations and at least one slave station, a data message, between at least two stations connected by the data transmission network, particularly in a motor vehicle, for implementing a method according to Claim 1 or 2, characterised in that the slave station has a first register (13) in which at least part of the message header is loaded, means (16a, 16b, 16c) for comparing at least part of the header with at least one characteristic word allocated to this station, the output from the comparison means being connected to the remainder (18, 19) of the station, so that the latter, if there is agreement when the comparison is carried out, will load data into a second register (14), connected to the data transmission network, in order to form the message containing a header field transmitted by the master station and a data field transmitted by the slave station.

6. Device according to Claim 5, characterised in that the slave station includes a third register (15) in which the message identification bit (11; 21) is loaded, the master station transmitting, after the header, a bit identifying an interrogation, and the slave station converting this bit into a bit identifying a response in the event of agreement at the time of comparison.
